# EUROPEAN PATENT APPLICATION

(11) **EP 4 679 259 A1**
(43) Date of publication of application: **14.01.2026**
(21) Application number: 24306148.8
(22) Date of filing: 08.07.2024
(51) Int. Cl.: G06F 8/41, G06F 8/76, G06F 9/445

(54) **CONFIGURING AN EDGE COMPUTING PLATFORM BY RESOLVING DEPENDENCIES IN THE CODE**

(71) Applicant: SCHNEIDER ELECTRIC INDUSTRIES SAS, 92500 Rueil-Malmaison (FR)
(72) Inventor: LEFORT, Stéphane, 06510 CARROS (FR); GENSAYA, Philip, 06000 NICE (FR); MORAND, Denis, 06390 CHÂTEAUNEUF-VILLEVIEILLE (FR)
(74) Representative: Plasseraud IP

(57) **Abstract**

A method for configuring a computing platform for edge computing with a software is provided, which comprises: receiving as input data software code; parsing the software code for identifying in the software code dependency data to be customized for execution of the software on the computing platform; customizing the software code dependency data for execution of the software on the computing platform; generating the software based on the software code and the customized software code dependency data; and loading the software onto the computing platform for execution.

## Description

The present disclosure relates to the integration and execution of software in edge computing, in particular to the integration and execution of machine learning software at an edge computing platform.

Edge Computing with a processor aims to harness the power of edge computing by deploying a processor capable of executing machine learning and/or other algorithms directly on edge devices. This enables real-time and efficient data processing, analysis, and decision-making at the edge, reducing latency and minimizing the need for constant data transmission to centralized servers.

The recent rapid growth of machine learning (ML) algorithms in software application development has led to an effort to include ML-based applications in Edge Computing runtime environments. The integration of machine learning (ML) represents a significant advancement in Edge Computing, empowering advanced applications at the edge. However, unlike conventional software approaches, ML-based applications entail distinct procedures for development, testing, deployment, execution, monitoring, and updating. For example, the development of a ML-based algorithm for an application is typically performed by a data scientist who has a specific expertise in the field of machine learning.

As a consequence, the integration of ML software on an edge computing platform presents new challenges.

There is therefore a need for providing improved schemes for configuring a computing platform for edge computing with new software and apparatuses implementing the same that address at least some of the above-described drawbacks and shortcomings of the conventional technology in the art.

It is an object of the present subject disclosure to provide improved schemes for configuring an edge computing platform and apparatuses implementing the same.

Another object of the present subject disclosure is to provide an improved scheme for configuring an edge computing platform and apparatus implementing the same for alleviating the above-described drawbacks and shortcomings of conventional schemes, in particular in that the proposed scheme for configuring an edge computing platform may be used for integration of new software (e.g. a new software application) on an edge computing platform which is already commissioned.

Yet another object of the present subject disclosure is to provide an improved scheme for configuring an edge computing platform and apparatus implementing the same for alleviating the above-described drawbacks and shortcomings of conventional schemes, in particular in that the proposed scheme for configuring an edge computing platform may be used for integration of new machine-learning software (e.g. a new ML software application) on an edge computing platform.

To achieve these objects and other advantages and in accordance with the purpose of the present subject disclosure, as embodied and broadly described herein, in one aspect of the present subject disclosure, a method for configuring a computing platform for edge computing with a software is proposed, which may comprise one or more of the following: receiving as input data a (platform agnostic) (e.g. Python) software code; processing (e.g. parsing) the software code for identifying in the software code dependency data to be customized for execution of the software on the computing platform; customizing the software code dependency data for execution of the software on the computing platform; generating the software based on the software code and the customized software code dependency data; and loading the software onto the computing platform for execution.

The proposed scheme advantageously allows deploying on an Edge computing platform which may not be connected to an external network (e.g. which may not be connected to the Internet) an application which has been developed with no knowledge of the platform (e.g. a software code which has been developed as platform agnostic).

The proposed scheme is therefore particularly advantageous for the deployment of Machine Learning-based application which are typically developed by data scientist expert(s), as the proposed scheme allows a data scientist expert to develop a ML-based application for which a deployment on an Edge computing platform is contemplated, with no specific knowledge of such Edge computing platform.

The proposed method advantageously provides a scheme that may be used for configuring an edge computing platform which is already commissioned with new software (e.g. a new software application), including in embodiments where the edge computing platform is running in a network connectionless manner, that is, without any data communication network connectivity with a network that is external to its edge computing environment. The edge computing environment in which an edge computing platform may be deployed may indeed be configured with any external network connectivity in order to preserve the environment from security attacks.

In addition, while the conventional processes for software integration at the Edge are hampered by fragmented workflows and technical knowledge gaps between diverse roles, the proposed method introduces a novel, independent framework which streamlines collaboration and knowledge sharing across disciplines, while empowering data scientists or developers with flexibility in tool selection. Standalone testing capabilities further enhance efficiency. The proposed approach further empowers successful software (e.g. machine-learning software) integration in various industrial settings, regardless of in-house expertise or infrastructure preferences.

In one or more embodiments, the proposed method may further comprise: executing the software on the computing platform.

In one or more embodiments, the software code may comprise an executable software code and configuration data. Further, in some embodiments, parsing the software code may comprise parsing the configuration data for identifying in the configuration data the dependency data. In some embodiments, the software may be generated based on the executable software code and the customized software code dependency data.

In one or more embodiments, the software may comprise the executable software code and runtime configuration data generated based on the customized software code dependency data.

In one or more embodiments, the customizing the software code may comprise: Mapping the dependency data with data to be used when executing the software on the computing platform.

In one or more embodiments, the (platform agnostic) software code may follow a preconfigured template canvas configured as a template code for execution on the computing platform. In some embodiments, the template canvas may include a standalone execution mode and a standalone initialization mode.

In one or more embodiments, the dependency data may comprise data defined as input data in the software code. In such embodiments, customizing the software code dependency data may comprise: Generating a mapping of the data defined as input data in the software code with data to be input to the software during execution on the computing platform.

In one or more embodiments, the dependency data may comprise data defined as output data in the software code. In such embodiments, customizing the software code dependency data may comprise: Generating a mapping of the data defined as output data in the software code with data to be output by the software during execution on the computing platform.

In one or more embodiments, the dependency data may comprise library data. In such embodiments, customizing the software code dependency data may comprise: Importing one or more libraries corresponding to the library data that can be used by the software during execution on the computing platform.

In one or more embodiments, generating the software may comprise: generating, based on the customized software code dependency data, plugin software to be used with the software for execution on the computing platform.

In one or more embodiments, the (platform agnostic) software code may comprise code for execution of an inference phase of a machine learning model.

In another aspect of the present subject disclosure, an apparatus is proposed, which comprises a processor and a memory operatively coupled to the processor, wherein the apparatus is configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed. In another aspect of the present subject disclosure, a data set representing, for example through compression or encoding, a computer program as proposed herein, is proposed.

It should be appreciated that the present subject disclosure can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 shows an exemplary edge computing environment to which the proposed methods may be applied according to one or more embodiments of the present subject disclosure;
Figure 2 illustrates an exemplary edge computing platform in an edge computing environment to which the proposed methods may be applied according to one or more embodiments of the present subject disclosure;
Figure 3 illustrates an exemplary scheme for configuring a computing platform for edge computing according to one or more embodiments of the present subject disclosure;

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive, SSD drives), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

As used herein, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the present subject disclosure, the terms "coupled" and "connected", along with their derivatives, may be indifferently used to indicate that two or more elements are in direct physical or electrical contact with each other, or two or more elements are not in direct contact with each other, but yet still co-operate or interact with each other.

In the following description and claims, the terms "payload", "payload data", "message", "packet", and "data packet" may be indifferently used, and may include data blocks, protocol data units or any unit of data that may be routed or transmitted between nodes or stations or across a network. A packet may include a group of bits, which may include one or more address fields, control fields and data, for example. A data block may be any unit of data or information bits.

For the purposes of the present disclosure, the term "server" is used herein to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and applications software which support the services provided by the server. Servers may vary widely in configuration or capabilities, but generally a server may include one or more central processing units and memory. A server may also include one or more mass storage devices, one or more power supplies, one or more wired or wireless network interfaces, one or more input/output interfaces, or one or more operating systems, such as Windows Server, Mac OS X, Unix, Linux, FreeBSD, or the like.

For the purposes of the present disclosure, a "computer network" should be understood to refer to a network that may couple devices (also referred to herein as "nodes") so that data communications may occur between devices, including between wireless devices operatively connected via a wireless network, for example. A network may also include mass storage, such as network attached storage (NAS), a storage area network (SAN), or other forms of computer or machine readable media, for example, and may include or be operatively connected to a server. A network may include the Internet, one or more local area networks (LANs), one or more wide area networks (WANs), wire-line type connections, wireless type connections, cellular, such as carrier telephone lines, optical fibers, synchronous optical networks, synchronous digital hierarchy links, powerline communication links (e.g. IEEE 61334, IEEE P1901.2), Ethernet, Bluetooth, Bluetooth Low Energy (BLE) or Bluetooth Smart, WiFi or any connection based on a IEEE802.11x protocols, ZigBee or any connection based on the IEEE802.15.4 protocol, Z-Wave, 6LowPAN (IPv6 Low-power wireless Personal Area Network), Thread, Sigfox, Neul, LoRa, any NFC connection, 2G (including GSM/GPRS/EDGE)/3G (including UMTS/HSPA)/4G (including LTE and LTE-Advanced)/5G cellular, or any combination thereof. Various types of devices, for example gateways, may be made available to provide an interoperable capability for differing architectures or protocols used in the network. Any number of nodes, devices, apparatuses, links, interconnections, etc. may be used in a computer network according to the present subject disclosure.

A communication link or channel may include, for example, analog telephone lines, full or fractional digital lines, wireless links including satellite links, or other communication links or channels, such as may be known to those skilled in the art.

In the following description and claims, the terms "machine learning", and "machine learning algorithm" may be indifferently used to refer to any software or algorithm that operates in the field of artificial intelligence. For example, a machine learning software may implement code for executing an algorithm that uses a neural network model of any suitable type for the target use of the algorithm.

It should be understood that embodiments of the present subject disclosure may be used for configuring a computing platform configured for edge computing for executing one or more new software (e.g. new software applications), in particular, although not limited to, configuring an edge computing platform for executing a software algorithm that uses a machine learning algorithm or model (e.g. configuring an edge computing platform with new machine-learning software) (e.g. at the application level).

Edge computing is a distributed computing model that brings computation and data storage closer to the sources of data. This alleviates the need for a management of data processing and data storage in remote data centers, thereby enabling autonomous operations (including data processing operations) and if needed real-time or near-real-time operations at one or more edge computing nodes.

Edge computing therefore allows moving computation operations to one or more edge locations (which may also be referred to as "edge computing nodes") (e.g. on-site), including to edge sites where there is little or no network connectivity. Such edge sites are then designed to operate in a fully autonomous manner from a network connectivity standpoint. Edge computing nodes located at edge sites will typically not include a user interface (such as for example a graphical user interface) and may in fact typically not include a display interface. As a consequence, an edge computing node may not be directly configured or controlled by a user operator, and any software setup, deployment and upgrade may be performed remotely (through an operation referred to as "fleet management").

For example, an edge computing node (e.g. deployed in a factory) may be configured for collecting data from one or more sensors, and for processing such data for system or machine control or monitoring purposes. Such an edge computing node may be configured for operating autonomously in that it may not be configured for accessing external resources, such as computational resources (e.g. resources made available on the Cloud), and may instead be configured with a network interface dedicated to remote control and configuration (include new software deployment) of the edge computing node.

In the following, some embodiments of the proposed methods, apparatuses and computer programs are described for the exemplary configuring of an edge computing node with software that uses machine learning. However, it will be appreciated by those having ordinary skill in the relevant art that the dynamic configuration of an edge computing node with any new software may be used in place of or in addition to the exemplary dynamic configuration of an edge computing node with new machine learning software described herein, which is given by way of example only according to embodiments of the present subject disclosure

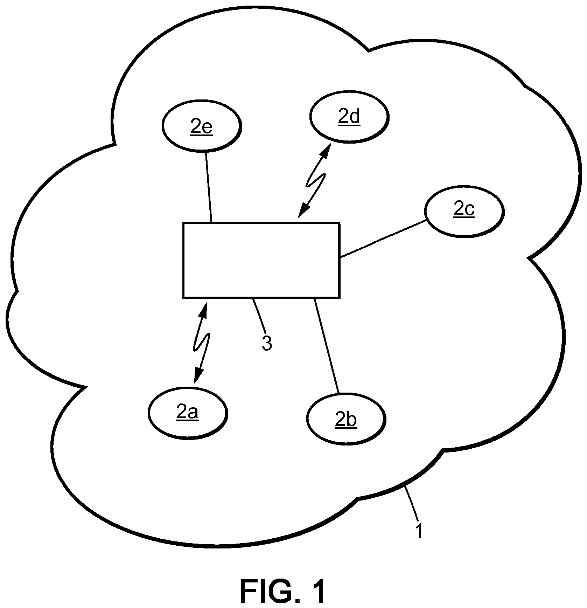

Figure 1 shows an exemplary edge computing environment (1) to which the proposed methods may be applied according to one or more embodiments.

Shown on Fig. 1 is an edge computing environment (1) (e.g. an edge computing network) comprising one or more data sources (2a,...,2e) and one or more edge computing platforms (3) (e.g. edge computing nodes) (only one edge computing platform being shown on Fig. 1). In the present subject disclosure, an edge computing node may sometimes be referred to as an "edge box."

For example, the edge computing network (1) may be installed in a facility, such as for example a manufacturing facility, a healthcare facility, or a commerce facility. Each of the data sources (2a,...,2e) may be configured for (wireless and/or wireline) data communication with the edge computing platform (3), and may be of various respective types, such as a user device or a sensor device configured to send to the edge computing platform (3) sensed measurement parameter data. For example, data source (2a) and (2d) may be configured for wireless communication with the edge computing platform (3), using any suitable wireless data communication protocol, and data sources (2b), (2c) and (2e) may be configured for wireless communication with the edge computing platform (3).

In one or more embodiments, the edge computing platform (3) may have little or no connectivity with any external network (including the Internet network) and may be configured to operate fully autonomously once commissioned.

Depending on the embodiment, the edge computing network (1) may use various network technologies (such as, for example, radio network technologies, optical network technologies, etc.), and implement a network topology and data communication protocols that are suitable for the network technology used by the network (1). The skilled person will understand that the proposed method is not limited to a specific network architecture, topology, (meshed network, star network, point-to-point network, etc.), to a specific network technology, or to a specific number or types of nodes, and that any network architecture, topology, network technology, with any number of edge computing node(s) and any number of data sources that are suitable for autonomous operations at the edge computing network level may be used for implementing embodiments of the present subject disclosure.

For example, the network formed by the edge computing network and the data sources may be of the low energy radiocommunication network, and use corresponding communication links and protocols, such as one or more of the following types: « Bluetooth Low Energy » (BLE), « Bluetooth smart », WiFi or any communication link based on the IEEE802.11x protocols, "Zigbee" or any communication link based on the following protocols: IEEE802.15.4, "Z-Wave", "6LowPAN" (IPv6 Low-power wireless Personal Area Network), "Thread", "Sigfox", "Neul", "LoRa", or based on technical specifications developed by the 3GPP for "LTE-M" networks, or any near-field communication link (NFC, « Near Field Communication »).

Assuming that in some embodiments the edge computing platform (3) has little or no network connectivity, the development and on-site deployment of new algorithms for runtime execution on the edge computing platform (3) often present several challenges, as such development and deployment may involve individuals or teams of individuals whose work is organized according to a silo approach. This often detrimentally affects the time-to-market for on-site deployment of new software (e.g. a new application), and/or may severely increase the complexity of integration of a new algorithm at runtime.

For example, the development and deployment of new software (e.g. a new application, a new data processing software, etc.) on an autonomous edge computing node may typically involve the following types of individuals or teams:
(1) Site management team: The site management team (which in some embodiments may be reduced to a site manager, e.g. a plant manager) is in charge of expressing the requirements for the new software to be developed. For example, such requirements may include one or more of a productivity increase (e.g. expressed as a percentage), a quality increase (e.g. expressed as a percentage), and a reduction in energy consumption (e.g. expressed as a percentage).
(2) Process team: The process team (which in some embodiments may be reduced to a process expert) is in charge of managing the processes used in the site where the edge computing node is deployed, and has the expertise required for identifying one or more parameters that will be involved for running the new software on the edge computing node.
(3) Software development team: The software development team (which in some embodiments may be reduced to a software developer) is in charge of developing a software that can be adapted for running on the edge computing node.
(4) Automation team: The automation team (which in some embodiments may be reduced to an automation engineer) holds the expertise regarding systems and sub-systems deployed on site, such as the data sources of Fig. 1, and knows how to access data produced by such systems and sub-systems.

For example, for integration of machine-learning software in the realm of edge computing, there are typically the following 4 principal roles:
A "Process Expert" role which is instrumental in understanding and optimizing the industrial processes, identifying key parameters for efficiency and quality and specializes in extracting historical data and, if necessary, labeling the data. The Process Expert may typically provide data (e.g. data collected at the edge) to be used for a training phase of a machine learning model, in some embodiments.

A "Data Scientist" role fulfilled by an expert at developing and configuring machine learning algorithms. The data scientist may advantageously have an expertise for one or more of the following tasks: analyze data provided by the process expert (e.g. including data collected at the edge), derive valuable insights and patterns that can enhance operational performance and, and work with data files (e.g. CSV files) for training purposes.

A "Plant Manager" role aligns the edge computing initiatives with the plant's strategic goals and operational requirements and is responsible for approving or rejecting the deployment of a machine learning model or algorithm on the process, emphasizing the crucial connection.

Lastly, an "Automation Engineer" role works closely to maintain the edge computing infrastructure, ensuring seamless integration of advanced technologies for data collection, analysis, and control.

Together, these professionals need to form a cohesive unit, where the process expert provides domain knowledge, the data scientist extracts insights, the plant manager aligns strategies, and the automation engineer implements and supports the technical aspects.

In one or more embodiments, the software to be developed and deployed to run on the edge computing node may use a machine learning (ML) algorithm, in which case the software development team may include one or more data scientists who have the necessary expertise for developing a ML-based algorithm, e.g. based on a ML framework as well as training data that are provided to them.

In such embodiments, as the process team may typically have the expertise for selecting relevant data to be used for training a ML model, the process team may be tasked with building a dataset (e.g. in the form of a csv file) which may be provided to a data scientist as a set of training data usable for training the ML model developed by the data scientist.

The data scientist may be tasked with selecting a suitable ML model or neural network architecture (e.g. a Mean Absolute Error (MAE) model, a Variational autoencoder (VAE), etc.) to be used by the ML algorithm to be developed using the training data provided by the process team, and to be deployed to run on the edge computing node.

The development and deployment of new software may therefore comprise in such embodiments a so-called "training phase" which comprises the development, by the software development team, of a software algorithm based on data provided by the process team.

In order to deploy the software algorithm on the edge computing node for runtime execution, a subsequent, so-called "runtime phase" may be performed, which comprises configuring the edge computing node for receiving data, for example provided by data sources, used at runtime as input data by the software running on the edge computing node, adapting the software algorithm for execution on the edge computing node (which may be network connectionless once commissioned), and gathering feedback from the site management team to ensure that initial requirements are met.

For example, the integration of a ML model at edge level may involve three different teams (process team, software development team and automation team). The challenge of integration of a ML model at edge level with reliability and scalability is particularly difficult to overcome in situations where no expert in the fields of automation, process and data science is available.

In addition, bidirectional communication between pairs of individuals of different teams among the process team, software development team and automation team can be complex and time consuming, in particular in cases where in-house software development skills (e.g. data scientist skills) are not available and have to be outsourced.

ML models are trained using historical data, while live data is utilized for real-time decision-making at the edge. It is critical to acknowledge that historical and live data may not consistently adhere to the same structure or naming conventions. Gaining access to historical data necessitates a deep comprehension of the underlying processes and systems, encompassing data storage locations.

In the realm of edge computing, professionals such as Process Experts, Data Scientists, Plant Managers, and Automation Engineers often rely heavily on each other, which can at times impede performance due to challenges in effective collaboration and communication.

One challenge arises from the fact that each role may have its own priorities, timelines, and methodologies, making it arduous to seamlessly align efforts. For instance, the Process Expert may need specific data analyses from the Data Scientist, who could be juggling multiple projects simultaneously. Similarly, the Plant Manager's strategic goals may not always align with the technical implementation timelines of the Automation Engineer. Integrating an ML model at the edge level, ensuring reliability and scalability, without comprehensive expertise across these fields, appears daunting. Bi-directional communication can be intricate and time-consuming, particularly when Data Scientist skills are outsourced.

In addition to the existing challenges, it is worth noting that individuals in these roles may not be familiar with each other's technologies or domain-specific knowledge, leading to potential miscommunications and misunderstandings. Moreover, they might not speak the same technical or professional language, further complicating effective collaboration and understanding across the team. These factors can significantly hinder the seamless integration of efforts and expertise required for successful implementation.

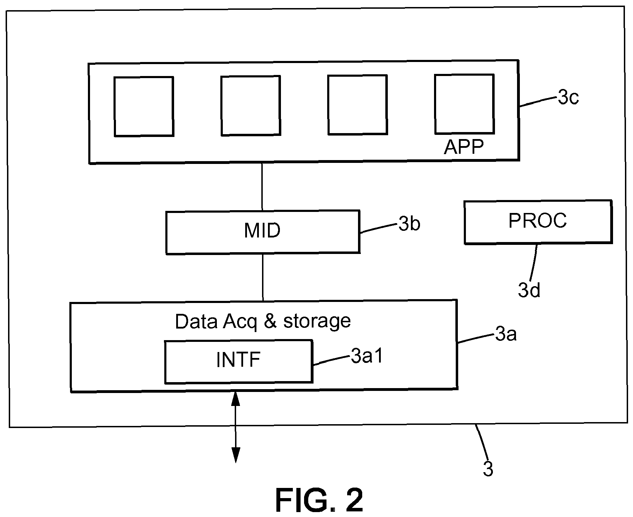

Figure 2 illustrates an exemplary edge computing platform in an edge computing environment to which the proposed methods may be applied.

Shown on Fig. 2 is an edge computing platform (3) which comprises a data acquisition and storage engine (3a), a middleware engine (3b), an application engine (3c), that are operatively connected with a control engine (3d), for example through an internal data communication bus (not represented on Fig. 2). The edge computing platform (3) may comprise other engines, such as for example a user interface engine, which are not illustrated on Fig. 2.

The data acquisition and storage engine (3a) may be configured for data communication with one or more data sources (e.g. sensor equipment configured in the edge computing environment) through a data communication interface (3a1). The data acquisition and storage engine (3a) may be configured for data storage in one or more memories. The data communication interface (3a1) may comprise a transmission/reception (TX/RX) direct memory access (DMA) controller, operatively connected to a transmission/reception (TX/RX) controller configured for controlling a transmission FIFO memory stack for transmission of data packets, and a reception FIFO memory stack for reception of data, a Media Access Controller (MAC), and a physical layer interface.

The middleware engine (3b) may be configured with any suitable message-oriented middleware engine (such as for example a Neural Autonomic Transport System (NATS), Kafka, or RabbitMQ messaging system), for supporting sending and receiving messages between the different engines of the edge computing platform (3) and/or between the edge computing platform (3) and other systems, whether external or internal to the edge computing environment, depending on the embodiment.

The application engine (3c) may be configured with one or more applications running on the edge computing node (3).

The control engine (3d) includes one or more processors, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, the control engine (3d) can be configured as a multi-processor computer having multiple processors for providing parallel computing.

The control engine (3d) may also comprise, or may be in communication with, computer storage media, such as, without limitation, a memory, capable of storing computer program instructions or software code that, when executed by a processor of the control engine (3d), causes the processor to execute a real-time operating system, one or more application tasks of the application engine (3c), the middleware engine (3b) and the data acquisition and storage engine (3a). The memory may be any type of data storage computer storage medium, capable of storing computer-readable program code implementing embodiments of the proposed method, may be operatively connected to the control engine (3d) and operable with the data acquisition and storage engine (3a) to facilitate transmission of data packets stored in association therewith.

It will be appreciated that the edge computing platform (3) shown and described with reference to Fig. 2 is provided by way of example only. Numerous other architectures, operating environments, and configurations are possible. Other embodiments of the platform may include fewer or greater number of components, and may incorporate some or all of the functionality described with respect to the platform components shown in Fig. 2. Accordingly, although the data acquisition and storage engine (3a), middleware engine (3b), application engine (3c), and control engine (3d) are illustrated as part of the edge computing platform (3), no restrictions are placed on the location and control of these components (3a - 3d). In particular, in other embodiments, one or more of these components (3a - 3d) may be part of different entities or computing systems.

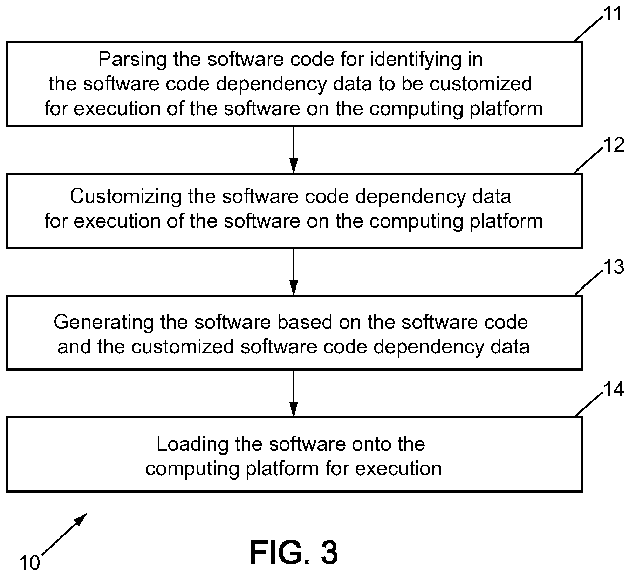

Figure 3 is a diagram that illustrates an exemplary scheme (10) for configuring a computing platform for edge computing according to one or more embodiments of the present subject disclosure.

One considers a computing platform for edge computing, such as for example the platform shown on Fig. 2.

In one or more embodiments, software code may be developed by a software developer (e.g. a data scientist) based on software specification provided by a user (e.g. a plant manager).

The software code developed by the software developer may be developed in any suitable programming language to be platform agnostic, that is, to be executable on a variety of platforms.

In some embodiments, the software code may be developed in any suitable (high-level) (multi-purposes) (scripting) programming language, such as for example Python, so that it may advantageously be executable on any computing platform configured to execute corresponding (Python) code.

In one or more embodiments, the software code developed by the software developer may be configured to perform data processing using a machine-learning model. For example, the software code developed by the software developer may be configured to perform data processing using a trained machine-learning model during an inference phase, and the development of the software code may include a training phase for performing training of the machine-learning model based on training data that may be provided to the software developer, for example by a process expert.

Advantageously, the software developer may not require specific knowledge regarding the edge computing environment (including the edge computing platform) in which the software developed by the software developer may eventually be executed. The proposed scheme allows to automatically customize the software code developed by the software developer to be deployed and executed on the edge computing platform, so that a software code developed e.g. by a data scientist may be ported to an edge computing platform in a runtime environment through processing by a computer-implemented proposed method, including in cases where the edge computing platform is network connectionless with respect to data communication networks external to the edge computing environment.

In one or more embodiments, the software code developed by the software developer may be received (not represented on Fig. 3) as input data.

In one or more embodiments, processing of the software code may be performed. In some embodiments, such processing may comprise the parsing (11) the software code, for identifying in the software code dependency data to be customized for execution of the software on the edge computing platform.

In one or more embodiments, the software code dependency data may be customized (12) for execution of the software on the computing platform.

In one or more embodiments, the dependency data may comprise data defined as input data in the software code. In some embodiments, the software code delivered by the software developer may be parsed in order to identify therein the input data used by the software code. In one or more embodiments, customizing the software code dependency data may then comprise the generating a mapping of the data defined as input data in the software code with data to be input to the software during execution on the computing platform.

This advantageously ensures that the input data that will be fed to the software code once deployed in its runtime environment (on the edge computing platform) corresponds to input data with which the software code was initially designed by the software developer.

In one or more embodiments, the software code may comprise source code (e.g. Python executable code) and configuration data (e.g. in the form of a configuration file, for example a csv file). The configuration data may be configured to include the software code dependency data to be customized for execution of the software on the target edge computing platform. As a consequence, advantageously, the processing of the source code may be confined to the processing of data included in the configuration file. This allows embodiments in which the source code (e.g. Python executable code) can be directly deployed for execution on the edge computing platform with a runtime configuration file which will have been generated by processing the configuration data included in the software code according to embodiments of the present subject disclosure.

In one or more embodiments, the dependency data may comprise data defined as output data in the software code. In some embodiments, the software code delivered by the software developer may be parsed in order to identify therein the output data produced by the software code. In one or more embodiments, customizing the software code dependency data may then comprise the generating a mapping of the data defined as output data in the software code with data expected to be output by the software during execution on the computing platform.

This advantageously ensures that the output data that will be produced by the software code once deployed in its runtime environment (on the edge computing platform) corresponds to output data expected by the user (e.g. by the plant manager).

In one or more embodiments, the dependency data may comprise library data (e.g. one or more Python libraries referred to by a Python software code). In one or more embodiments, customizing the software code dependency data may then comprise importing (from a library repository) one or more libraries corresponding to the library data that can be used by the software during execution on the computing platform.

This advantageously ensures that the libraries called by the software code can be accessible once the software code is deployed in its runtime environment (on the edge computing platform), so that the software code may be run seamlessly in its runtime environment, including in embodiments where this runtime environment is connectionless with respect to network connections outside the environment.

In one or more embodiments, a software, corresponding to the software code and executable on the edge computing platform, may be generated (13) based on the software code and the customized software code dependency data.

Advantageously, in some embodiments, a core part of the software code (in some embodiments defined by the software code minus the software code dependency data which will have been processed to be customized) may not need to be customized to be executable on the edge computing platform, even though the software developer in charge of developing the software code may have information on software specifications to be met, however no information on the platform on which the software will be executed. In some embodiments, the parts of the software code that are modified for execution on the edge computing platform may be limited to the software code dependency data that are identified as requiring customization for execution on the edge computing platform.

In one or more embodiments, once the software has been generated, it may be loaded (14) onto the edge computing platform for execution.

The following describes a sequence of operations that may be performed according to embodiments of the present subject disclosure, as part of a global framework proposed to a user, and in the non-limiting case of a software code implementing a machine-learning engine (which may be referred to as machine-learning model or a machine-learning algorithm):
In this phase, raw data may be processed, cleaned, and transformed (e.g. by a process expert) into a format suitable for ML modeling (e.g. assigned to a data scientist). This may involve tasks such as data cleaning, normalization, feature engineering, and splitting the data into testing sets, in order to provide the software developer with data usable for developing software code to be processed according to embodiments of the present subject disclosure for deployment on a potentially network connectionless edge computing platform. In embodiments in which the deployment of a ML-based application is contemplated, this may additionally or alternatively involve a task of formatting data to be provided to the data scientist into one or more suitable training sets. In some embodiments, a process expert role may be responsible for generating data (e.g. by collecting data on the edge computing environment, such as sensor data) and formatting such data into any suitable format (e.g. a data file in any suitable file type, such as for example a Comma Separated Value (CSV) file), and providing such formatted data to the application software developer (e.g. the data scientist).

In some embodiments, the data preparation phase may be configured so that application software developer (e.g. the data scientist) is provided with data corresponding to data to be used in the target edge computing environment once the software application is deployed on the edge computing platform. In some embodiments, such data may include one or more of: input data information describing input data to be used as input by the software application once deployed on the target edge computing platform, representative samples of such input data for test and, in some embodiments, training purposes, output data information describing output data to be produced as output by the software application once deployed on the target edge computing platform, and representative samples of such output data for test and, in some embodiments, training purposes.

For example, in one or more embodiments, the data preparation phase may involve one or more of the following operations: selection of variables, selection of timeframe, selection of file type (e.g. json, csv, etc.), and one or more scores that are usable for validation of the software application (e.g. of the ML algorithm).

In one or more embodiments, a software development phase may be performed further to the data preparation phase, during which a software code may be developed based on data resulting from the data preparation phase. In embodiments in which the software code uses a machine learning model, a machine learning model (algorithm) may be developed (including, in some embodiments, training) based on data resulting from the data preparation phase.

In some embodiments, the application software developer (e.g. the data scientist) performing the software application development may be provided with a development template to facilitate the processing of the software code (that will be developed) according to embodiments of the present subject disclosure. For example, in some embodiments, the development template may comprise predefined Python methods, such as init() and run(), for example to be configured so that the software code is repeatedly executed at each cycle of one or more cycles of data collection.

In embodiments in which the software code uses a machine learning model that is trained during a training phase (prior to an inference phase), the machine learning model may be trained based on the prepared data resulting from the data preparation phase. In some embodiments, during training, the model may learn the underlying patterns and relationships within the data, adjusting its parameters to minimize errors and improve predictive performance. For example, a data scientist role may receive the prepared data, and based thereon may proceed with performing a training phase on a machine learning model chosen based on software specification. Advantageously, the proposed process allows the data scientist role to continually test and train the model without ever needing to be connected to the edge computing framework on which the developed ML software will eventually be run (e.g. an edge computing platform). Further, the data scientist role may perform standalone tests independently of the edge computing framework.

In some embodiments, the application software developer may generate a specification (configuration) file (in any suitable file type, such as for example a CSV file) which contains data representing one or more of: a list of input variables, a list of output variables, and data related to expected timeseries (e.g. expected timeseries length).

For example, in embodiments in which the software code uses a machine learning model, the data scientist may generate a specification (configuration) file (in any suitable file type, such as for example a CSV file) which contains data representing one or more of: a list of features (input variables), a list of predictions (output variables) and data related to expected timeseries (e.g. expected timeseries length).

For example, in embodiments in which the software code is developed in Python, the data scientist may deliver a Python code (for example in a compressed file (e.g. zip file)) and a specification (configuration) file (for example in a csv file) holding data describing parameters (input, output) used for execution of the code.

In one or more embodiments, the application software development phase may therefore deliver a (platform agnostic) software code that comprises source code (e.g. Python executable code) on the one end, and configuration data (e.g. in the form of a configuration file, for example a csv file) on the other end. The configuration data may be configured to include the software code dependency data to be customized for execution of the software on the target edge computing platform.

In some embodiments, the configuration file may be generated from a specification file delivered to the software application developer (e.g. the data scientist) by the data preparation phase (e.g. by the process expert). In some embodiments, the specification file and the configuration file may be of a same file type (e.g. a csv file).

The application development phase may therefore deliver a platform agnostic software code, that is, a software code that can be post-processed in order to be tailored to a specific runtime environment, including for example a network connectionless edge computing platform. This platform agnostic software may be provided as input data to a software deployment phase that includes processing according to embodiments of the present subject disclosure.

Advantageously, the proposed scheme allows outsourcing the development of a complex machine-learning algorithm or model to be used (in some embodiments once trained) in a ML-based application deployed on a (in some embodiments network connectionless) edge computing platform to a machine learning expert who can perform the development of the ML software code with no knowledge of the specifics of the edge computing platform. In some embodiments, the development of the ML software code may be based on data provided as output of the data preparation phase, and in some embodiments may use a development template in order to streamline the processing of the developed software code for deployment on the edge computing platform as proposed in embodiments of the present subject disclosure.

In one or more embodiments, the software code developed during the software application development phase is processed in order to enable a seamless deployment of an executable software on the target edge computing platform based on the software code.

For example, in some embodiments, the processing of the software code may comprise processing one or more of a source code file (e.g. of a Python code (for example in a compressed file (e.g. zip file))) and a specification (configuration) file (for example in a csv file) holding data describing parameters (input, output) used for execution of the code, as delivered as results of the application software development phase.

As another example, in some embodiments, the processing of the software code may comprise processing one or more of application code file (e.g. of a Python runtime application) configured for execution on the edge computing platform, and a configuration file (for example in a compressed file (e.g. zip file)) holding data describing parameters (input, output) used for execution of the application code, and deploying the configuration file to the application.

In one or more embodiments, such processing may comprise the parsing the software code for identifying in the software code dependency data to be customized for execution of a software on the edge computing platform. In some embodiments, the dependency data may comprise one or more of data defined as input data in the software code, data defined as output data in the software code, and library data.

In some embodiments, such processing may further comprise customizing the software code dependency data for execution of the software on the edge computing platform.

For example, the software code developed during the software application may involve calls to one or more libraries (e.g. Python libraries) that are identified as not being usable as such for execution on the edge computing platform. In some embodiments, calls for such identified libraries may be replaced with calls for libraries that can be configured onto the edge computing platform, for example as part of the software deployment, and the corresponding libraries are scheduled for deployment onto the edge computing platform. In some embodiments, customizing the software code dependency data may then comprise importing one or more libraries corresponding to the library data that can be used by the software during execution on the computing platform.

As another example, the software code developed during the software application may refer to variables, such as input variables with names that have no process meaning from the standpoint of the application software developer (e.g. "input_var_1", "input_var_2", etc.). In some embodiments, a mapping may be generated in order to link the data used as input data in the software code developed during the software application with the data provided as input data to the application software once deployed as runtime on the edge computing platform. In some embodiments, customizing the software code dependency data may then comprise one or more of generating a mapping of the data defined as input data in the software code with data to be input to the software during execution on the computing platform, and generating a mapping of the data defined as output data in the software code with data to be output by the software during execution on the computing platform.

In embodiments in which the software code uses a machine learning model, once the machine learning model is trained (and in some embodiments validated), it can be deployed to a production environment where it can be used for example to generate predictions or provide insights based on new, unseen data (input at runtime).

For example, in some embodiments, a mapping may be performed between target edge computing platform runtime software variables and data representing one or more of input variables (e.g. features) and output data (e.g. predictions) defined as part of the software code. In some embodiments, such mapping may be performed based on a configuration delivered by the application software development phase.

In one or more embodiments, the application software development phase may separately deliver a (platform agnostic) software code that comprises source code (e.g. Python executable code), and configuration data (e.g. in the form of a configuration file, for example a csv file). The configuration data may in some embodiments be configured to include the software code dependency data to be customized for execution of the software on the target edge computing platform.

In such embodiments, the processing of the source code according to embodiments of the present subject disclosure may be confined to the processing of data included in the configuration file. The source code (e.g. Python executable code) may then be directly deployed for execution on the edge computing platform with a runtime configuration file which will have been generated by processing the configuration data included in the software code according to embodiments of the present subject disclosure.

Therefore, in some embodiments, the processing of the software code delivered by the software application development phase may comprise (and may be confined to) processing the configuration file included in the software code, and a runtime configuration file may be generated based on the configuration file included in the software code.

In some embodiments, the plant manager role may take the software code provided by the data scientist role for deployment and may integrate such software code into the target edge computing system, in some embodiments after it is validated.

In one or more embodiments, once the (edge runtime environment) software has been generated from processing one or more of the (platform agnostic) software code and the customized software code dependency data according to embodiments of the present subject disclosure, the (runtime) software may be deployed (loaded) onto the edge computing platform for execution.

In one or more embodiments, once the software has been deployed on the platform, it may be executed on the edge computing platform, using input data provided to the edge computing platform in a runtime environment.

In some embodiments, a Python executable code that has been developed during the application software development phase (e.g. a Python executable code for a ML-based model developed and trained by a data scientist) may be directly loaded onto the target edge computing platform, together with its associated runtime configuration file which will have been generated based on a configuration file developed during the application software development phase as part of the software code, for seamless execution on the target edge computing platform.

Deploying a machine learning model in production requires setting up the necessary infrastructure and resources. This includes ensuring scalability, monitoring, security, and efficient resource allocation to guarantee reliable and performant model operation. In some embodiments, an automation engineer role may streamline this process by executing tasks like variable binding and system health checks, ensuring everything functions as intended.

In some embodiments, a parameter representing an expected length n of a timeseries may be specified in the configuration file (depending on the embodiment, groups of data could be published on the fly or each time n data points may be made available).

In the inference stage, the deployed model may use its learned knowledge to generate actionable predictions or insights from new input data. This is where the model puts its knowledge to work, providing real-world value to the customer by delivering the desired results.

Advantages of the proposed scheme according to the present subject disclosure include the following:
Python: The proposed scheme provides a simplified approach to Machine Learning / Python that allows users to build and deploy ML models efficiently and quickly. The proposed scheme increases accessibility, reduces development time, empowers non-technical users, and encourages innovation in ML applications.

No Dependency on Frameworks: The proposed architecture allows for flexibility by not relying on specific frameworks, enabling easy adaptation to changing technologies or preferences. Developers have the freedom to choose the most suitable tools and libraries for their specific needs. It allows for leveraging the best features of different frameworks or even building custom solutions.

Simple to Plugin: The proposed scheme allows easy integration of new modules, and adding new algorithms or extending functionality becomes straightforward, reducing development time and effort.

Standalone Testing: Individual Machine Learning apps can be tested independently, promoting a robust and reliable testing process. Each application's functionality can be verified without the need for complex integration tests.

The development and/or deployment of new software on an edge computing environment (which may be referred to herein as "edge computing software") managed by a user may be made available as plug & play software or as a service.

New edge computing software may be proposed as plug & play software to serve users who want to develop their own software (e.g. develop a ML-based software to be deployed on an edge computing environment) and rely on their own (or outsourced) edge computing software development resources.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for configuring a computing platform for edge computing with a software,
- Parsing software code for identifying in the software code dependency data to be customized for execution of the software on the computing platform;
- Customizing the software code dependency data for execution of the software on the computing platform;
- Generating the software based on the software code and the customized software code dependency data;
- Loading the software onto the computing platform for execution.

2. The method according to claim 1, further comprising: executing the software on the computing platform.

3. The method according to any of the preceding claims, wherein the software code comprise an executable software code and configuration data, wherein parsing the software code comprises parsing the configuration data for identifying in the configuration data the dependency data, and wherein the software is generated based on the executable software code and the customized software code dependency data.

4. The method according to claim 3, wherein the software comprises the executable software code and runtime configuration data generated based on the customized software code dependency data.

5. The method according to any of the preceding claims, wherein the customizing the software code comprises:
Mapping the dependency data with data to be used when executing the software on the computing platform.

6. The method according to any of the preceding claims, wherein the software code follows a preconfigured template canvas configured as a template code for execution on the computing platform, and wherein the template canvas includes a standalone execution mode and a standalone initialization mode.

7. The method according to any of the preceding claims, wherein the dependency data comprises data defined as input data in the software code, and wherein customizing the software code dependency data comprises:
Generating a mapping of the data defined as input data in the software code with data to be input to the software during execution on the computing platform.

8. The method according to any of the preceding claims, wherein the dependency data comprises data defined as output data in the software code, and wherein customizing the software code dependency data comprises:
Generating a mapping of the data defined as output data in the software code with data to be output by the software during execution on the computing platform.

9. The method according to any of the preceding claims, wherein the dependency data comprises library data, and wherein customizing the software code dependency data comprises:
Importing one or more libraries corresponding to the library data that can be used by the software during execution on the computing platform.

10. The method according to any of the preceding claims, wherein generating the software comprises: generating, based on the customized software code dependency data, plugin software to be used with the software for execution on the computing platform.

11. The method according to any of the preceding claims, wherein the software code comprises code for execution of an inference phase of a machine learning model.

12. An apparatus, the apparatus comprising a processor and a memory operatively coupled to the processor, wherein the apparatus is configured to perform a method according to any of claims 1 to 11.

13. A computer program product comprising computer program code tangibly embodied in a computer readable medium, said computer program code comprising instructions to, when provided to a computer system and executed, cause said computer to perform a method according to any of claims 1 to 11.

14. A data set representing, for example through compression or encoding, a computer program product according to claim 13.
